(19) Europäisches Patentamt
European Patent Office
Office européen des brevets

(11) Veröffentlichungsnummer: **0 022 187**
**B1**

# (12) EUROPÄISCHE PATENTSCHRIFT

(45) Veröffentlichungstag der Patentschrift: **13.04.83**

(51) Int. Cl.[3]: **C 09 C 3/08,** C 09 C 3/12, C 09 C 1/36

(21) Anmeldenummer: **80103276.4**

(22) Anmeldetag: **12.06.80**

(54) **Anorganische Titan- und Eisenoxidpigmente mit verbesserter Glanzgebung und Zerteilbarkeit in Lackbindemitteln und Verfahren zu ihrer Herstellung.**

(30) Priorität: **20.06.79 DE 2924849**

(43) Veröffentlichungstag der Anmeldung: **14.01.81 Patentblatt 81/2**

(45) Bekanntmachung des Hinweises auf die Patenterteilung: **13.04.83 Patentblatt 83/15**

(84) Benannte Vertragsstaaten: **DE FR GB IT**

(56) Entgegenhaltungen:
**FR-A-2 038 894**
**US-A-3 515 566**

(73) Patentinhaber: **BAYER AG, Zentralbereich Patente, Marken und Lizenzen, D-5090 Leverkusen 1, Bayerwerk (DE)**

(72) Erfinder: **Köhler, Klaus, Dr., Friedrich-Ebert-Strasse 299, D-4150 Krefeld (DE)**
Erfinder: **Woditsch, Peter, Dr., Deswatinesstrasse 83, D-4150 Krefeld (DE)**
Erfinder: **Stütgens, Heribert, Dr., Deswatinesstrasse 84, D-4150 Krefeld (DE)**
Erfinder: **Bayer, Eckhard, Dr., Grevenbroicher Strasse 47, D-4150 Krefeld (DE)**
Erfinder: **Nollen, Klaus, Dr., Rickfelsweg 25, D-4150 Krefeld (DE)**
Erfinder: **Sander, Hans, Ing.-grad., Deswatinesstrasse 79, D-4150 Krefeld (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

# Anorganische Titan- und Eisenoxidpigmente mit verbesserter Glanzgebung und Zerteilbarkeit in Lackbindemitteln und Verfahren zu ihrer Herstellung

Gegenstand dieser Erfindung sind anorganische Titan- und Eisenoxidpigmente, die durch eine Behandlung mit organischen Hilfsmitteln vor oder während einer abschließenden Mikronisierung eine verbesserte Glanzgebung und Zerteilbarkeit in Lackbindemitteln aufweisen.

Schleierfreier Hochglanz von Beschichtungen und gute Zerteilbarkeit bei der Einarbeitung in Lackbindemittel sind wichtige Forderungen, die an hochwertige Pigmente gestellt werden. Neben anderen Eigenschaften, wie z. B. guter Wetterstabilität oder Aufhellvermögen stellen sie ein wesentliches Kriterium der Qualitätsbeurteilung dar. Es hat in der Vergangenheit nicht an Vorschlägen gefehlt, dieses Ziel zu erreichen. Kennzeichnende Maßnahme vieler Patentschriften ist die Beaufschlagung der Pigmentoberfläche mit organischen Hilfsstoffen vor oder während einer den Herstellungsprozeß abschließenden Mahlung. Üblicherweise wird dabei die Pigmentzerkleinerung in Stift-, Kugel- oder Pendelmühlen vorgenommen. Besonders hochwertige Pigmente werden durch Mikronisierung in Strahlmühlen, z. B. Luftstrahl- oder Dampfstrahlmühlen, erhalten.

Als organische Hilfsmittel zur Oberflächenmodifizierung der Pigmente ist eine Vielzahl von Verbindungen bekannt. Neben Polyolen, Alkylenoxiden, Phenolen, langkettigen Fettalkoholen oder Fettsäureestern, um nur einige Substanzklassen zu nennen, werden u. a. auch Organosiliciumverbindungen vorgeschlagen.

Ihre Anwendung zielt auf die Hydrophobierung von Pigmenten oder Füllstoffen ab und hat die Verbesserung der Dispergierbarkeit und Einarbeitbarkeit in Kunststoffen zum Gegenstand. So wird z. B. in der DE-OS 2 012 017 die Behandlung von $TiO_2$ mit Natrium-methylsilikonat zur Verbesserung der Dispergierbarkeit in Polystyrol beschrieben. Üblich ist auch eine Hydrophobierung mit Polysiloxanen, wie z. B. mit Octamethylcyclotetrasiloxan (GB 959 211) zur Verbesserung der Einarbeitbarkeit in Polyamid oder die Behandlung mit Silanen, wie z. B. Trialkoxysilanen, beschrieben in der GB 825 404.

Die Herstellung stabiler Dispersionen in Wasser unter Zuhilfenahme von Si—H-gruppenhaltigen Polymethylsiloxanen ist aus der ES 389 831 bekannt.

Durch derartige Oberflächenbehandlungen ist es jedoch nicht möglich, Pigmente mit hervorragender schleierfreier Glanzgebung in Lackbindemitteln zu erhalten.

Es ist auch bekannt, Pigmente mit Alkanolaminen zu behandeln. So ist z. B. in der US-Patentschrift 3 345 187 die Verwendung von Trialkanolaminen vorgeschlagen worden, in der deutschen Patentschrift 2 442 678 die von Diisopropanolamin. Nach dem Verfahren der DE-OS 1 792 022 wird Triethanolamin im Verlauf einer sogenannten doppelten Dampfstrahlmahlung mit der Pigmentoberfläche in Kontakt gebracht. Die US-Patentschrift 2 737 460 hat die Mahlung von Pigmenten mit Trialkanolaminen in Anwesenheit von feinteiligen Füllstoffen, wie z. B. Aerosil, zum Gegenstand. Es ist auch bekannt, Salze von Alkanolaminen mit organischen Säuren, wie z. B. Milchsäure (DE-PS 1 271 862) oder Benzoesäuren (US-PS 3 172 772) zu verwenden.

Die zitierten Maßnahmen sind entweder technisch aufwendig oder kostspielig und die resultierenden Pigmente genügen trotz deutlicher Fortschritte gegenüber organisch unbehandelten Titandioxiden nicht den höchsten Qualitätsansprüchen, die hinsichtlich Glanzgebung und Zerteilbarkeit gestellt werden, insbesondere bei mit $SiO_2$ und $Al_2O_3$ nachbehandelten Pigmenten.

Überraschenderweise wurde nun gefunden, daß sich anorganische Titan- und Eisenoxidpigmente mit verbesserter Glanzgebung und Zerteilbarkeit in Lackbindemitteln in einfacher Weise durch eine Behandlung mit organischen Hilfsmitteln vor der abschließenden Mikronisierung herstellen lassen, wenn man eine Kombination von Polyhydrogensiloxanen mit Alkanolaminen verwendet.

Die vorliegende Erfindung betrifft anorganische Titan- und Eisenoxidpigmente mit einer verbesserten Glanzgebung und Zerteilbarkeit in Lackbindemitteln mit einer Beschichtung aus Polyhydrogensiloxanen und Alkanolaminen sowie ein Verfahren zu deren Herstellung durch Beschichtung der Pigmente vor oder während der abschließenden Mikronisierung mit den vorgenannten Verbindungen, wobei Weißpigmente auf Basis von $TiO_2$ oder Titanaten oder Eisenoxidfarbpigmente, die gegebenenfalls anorganisch nachbehandelt wurden, bevorzugt geeignet sind. Die neuen Pigmente eignen sich insbesondere zur Pigmentierung von Polymermaterial und wäßrigen Suspensionen. Es hat sich als vorteilhaft erwiesen, ein Gewichtsverhältnis von Polyhydrogensiloxan zum Alkanolamin im Bereich 2 : 1 bis 1 : 10, vorzugsweise 1 : 2 bis 1 : 5, zu wählen.

Dabei können kettenförmige, verzweigte oder cyclische Polyhydrogensiloxane verwendet werden, die folgende Bausteine in wechselnder Anordnung aufweisen können,

$$[R_2R'-SiO_{1/2}] \quad [RH-SiO] \quad [R'-SiO_{3/2}] \quad [SiO_2]$$

wobei R und R' gleiche oder verschiedene — Hydrogen-, Alkyl-, Cycloalkyl-, Aryl- und/oder Alkenyl-Reste sein können, die Anzahl der Siliciumatome größer als 5 ist.

Dies sind z. B. $[SiMe_3]$ endgestoppte lineare Polyhydrogenmethylsiloxane, bevorzugt mit Kettenlängen von durchschnittlich 10,30 oder 50 $[SiMe_2O]$-Einheiten. Geeignet sind auch teilweise hydrierte Polysiloxane des beschriebenen Typs, bevorzugt mit 5$[SiHMeO]$- sowie 5$[SiMe_2O]$-Einheiten. Besonders bevorzugt sind auch $[SiHMe_2]$-endgestoppte Polyvinylhydrogenmethylsiloxane,

besonders bevorzugt mit 5[SiHMeO]- und 3[Si(CH=$CH_2$)MeO]-Einheiten. Eine weitere bevorzugte Verbindungsklasse stellen verzweigte Polyhydrogensiloxane dar, so z. B. ein [$SiHMe_2$]-endgestopptes einfachverzweigtes permethyliertes Polysiloxan mit 9[$SiMe_2O$]-Einheiten.

Als Alkanolamine können Trialkanolamine, Dialkanolamine und/oder Monoalkanolamine eingesetzt werden. Besonders geeignet sind Triethanolamin, Triisopropanolamin, 2-Amino-2-methyl-propanol-1, 2-Amino-2-hydroxymethyl-propandiol-1,3.

Die organischen Hilfsstoffe werden mit dem Pigment in an sich bekannter Weise vor oder während einer abschließenden Mahlung in Kontakt gebracht. Es ist gleichgültig, ob sie den bei der Pigmentherstellung anfallenden feuchten Filterkuchen, Pasten oder Aufschlämmungen vor der Trocknung zugemischt werden, oder ob sie unmittelbar vor der abschließenden Mahlung dem getrockneten Gut in geeigneter Weise, beispielsweise durch Aufsprühen beigegeben oder beispielsweise im Falle einer Dampfstrahlmahlung dem Dampf unmittelbar bei der Einspeisung in die Strahlmühle zugesetzt werden. Die Wirksamkeit der erfindungsgemäß einzusetzenden Verbindungen ist unabhängig von der Reihenfolge der Zugabe. Gleichgültig ob Gemische von Alkanolaminen mit Polyhydrogensiloxanen oder zuerst Alkanolaminen und anschließend das Polyhydrogensiloxan oder umgekehrt zugegeben werden, sind Pigmente zugänglich, die nach der Mikronisierung im Glanz, Schleier und der Körnigkeit verbessert sind gegenüber den nur mit Alkanolaminen oder nur mit Polyhydrogensiloxanen behandelten Produkten. Es liegt eindeutig ein synergistischer Effekt vor.

Dem Verfahren sind alle anorganischen Weiß- und Buntpigmente zugänglich. Besonders vorteilhafte Ergebnisse werden mit Weißpigmenten auf Basis von $TiO_2$ oder Titanaten oder mit Buntpigmenten wie Eisenoxiden erzielt. Die Pigmente können gegebenenfalls einer vorherigen anorganischen Nachbehandlung unterworfen worden sein.

Das erfindungsgemäße Verfahren zur Verbesserung von Glanz und Schleier ist unabhängig vom Herstellungsverfahren der Pigmente. So kann ein $TiO_2$-Pigment verbessert werden, gleichgültig ob es nach dem Sulfatverfahren oder nach dem $TiCl_4$-Verbrennungsverfahren hergestellt wurde und unabhängig, ob ein Rutil- oder Anataspigment vorliegt.

Für die Prüfung der Glanzgebung und der Zerteilbarkeit in Lackbindemitteln wird das Pigment in einem Lackbindemittel durch einen Dissolver dispergiert. Die Dispergierung erfolgt in einem hochviskosen Bindemittel/Lösungsmittelgemisch von 60% Alkydharz (Ricinen-modifiziertes Alkydharz, Öllänge 35; Bayer Produkt Alkydal 35) in Xylol unter folgenden Bedingungen:

| | |
|---|---|
| Mahlgut-Pigment-Volumen-Konzentration (PVK) | 37,6% |
| Durchmesser der Dissolverscheibe | 3,5 cm = D |
| Behälter-Durchmesser | 5,5 cm = 1,57 D |
| Dissolverscheibenabstand vom Boden | 1,75 cm = 0,5 D |
| Füllhöhe des Mahlgutes | 3,5 cm = D |
| Randgeschwindigkeit der Dissolverscheibe | 11 m/s |
| Dispergierzeit | 5 Minuten |

Nach 5 Minuten Dispergierzeit werden Proben entnommen, mit dem Alkydharz und einem Melaminharz (Handelsprodukt Maprenal MF 800, eingetragenes Warenzeichen der Hoechst AG) auf eine PVK von 15% aufgelackt, so daß das Verhältnis von Alkydharz zu Melaminharz 77 : 23 beträgt. Die Dispergierfeinheit wird in üblicher Weise mit einem Grindometer bestimmt (DIN 53203). Die hergestellten Lacke werrden dann mit 120 µm-Naßfilmdicke auf Glasplatte aufgezogen und 30 Minuten bei 120°C gehärtet. Die Glanzmessung erfolgt mit einem Goniophotometer unter einem Winkel von 25°. Die erhaltene Peakhöhe im Reflexionsmaximum ist ein Maß für den Glanzwert, und die Höhe der Streukurve 1° neben dem Reflexionsmaximum stellt ein Maß für den Glanzschleierwert dar.

Ein hochglänzender Lack zeichnet sich durch hohe Glanzwerte und niedrige Glanzschleierwerte aus.

Nachfolgend wird die Herstellung der erfindungsgemäßen Pigmente beispielhaft beschrieben:

Beispiel 1

Ein nach dem Sulfatverfahren hergestelltes $TiO_2$-Pigment mit Rutilstruktur wurde mit 3,8% $SiO_2$ und 4% $Al_2O_3$ anorganisch nachbehandelt und nach den üblichen Wasch- und Filtrationsschritten getrocknet. Das Pigment wird mit 0,12 Gew.-% (bezogen auf trockenes Pigment) eines Polymethylhydrogensiloxans der durchschnittlichen Formel

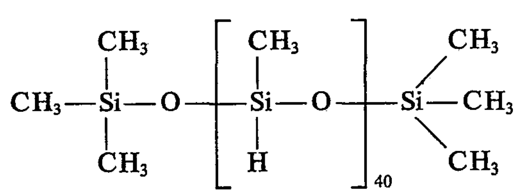

und 0,36% Triethanolamin besprüht und in einer mit überhitztem Wasserdampf betriebenen Strahlmühle mikronisiert.

Die Dispergierfeinheit und die Glanz- und Glanzschleierwerte können der Tabelle 1 entnommen werden.

### Vergleichsbeispiel A)

Durch das Vergleichsbeispiel A wird gezeigt, daß die alleinige Anwendung von Triethanolamin ein qualitativ weniger gutes Pigment liefert. Das Rutilpigment des Beispiels 1 wird nach dem Trocknen mit 0,48% Triethanolamin besprüht und in der Strahlmühle analog Beispiel 1 mikronisiert. Die Dispergiereigenschaften sind aus Tabelle 1, Nr. 2 ersichtlich.

### Vergleichsbeispiel B)

Durch das Vergleichsbeispiel B wird gezeigt, daß die alleinige Anwendung des Polymethylhydrogensiloxans ein qualitativ schlechteres Pigment liefert.

Das Rutilpigment, wie in Beispiel 1 beschrieben, wird nach dem Trocknen mit 0,48% des beschriebenen Polymethylhydrogensiloxans des Beispiels 1 besprüht und mikronisiert; s. Tabelle 1.

### Beispiel 2

Dem gewaschenen Filterkuchen des Rutilpigments des Beispiels 1 wird vor dem Trocknen 0,15 Gew.-% (bezogen auf trockenes Pigment) des Polymethylhydrogensiloxans des Beispiels 1 zugemischt. Nach dem Trocknen wird mit 0,45 % Triisopropanolamin besprüht und analog Beispiel 1 mikronisiert; s. Tabelle 1.

### Beispiel 3

Das Rutilpigment des Beispiels 1 wird nach dem Trocknen mit 0,12% des Polymethylhydrogensiloxans des Beispiels 1 und 0,58% 2-Amino-2-methyl-1-propanol besprüht und analog Beispiel 1 dampfstrahlgemahlen; s. Tabelle 1.

### Beispiel 4

Das Rutilpigment des Beispiels 1 wird nicht organisch nachbehandelt.

Tabelle 1

| Gemäß Beispiel | Organische Behandlung | Glanz [%] | Schleier [%] | Grindometerwert [µ] | Hegman-Wert |
|---|---|---|---|---|---|
| 1 | 0,12% α,ω-Bis(trimethylsilyl)-polymethylhydrogensiloxan 0,36% Triethanolamin | 88 | 24 | 12 | 7 |
| A | 0,48% Triethanolamin | 77 | 37 | 20 | 6,4 |
| B | 0,48% α,ω-Bis(trimethylsilyl)-polymethylhydrogensiloxan | 76 | 35 | 16 | 6,7 |
| 2 | 0,15% α,ω-Bis(trimethylsilyl)-polymethylhydrogensiloxan 0,45% Triisopropanolam | 89 | 22 | 10 | 7,2 |
| 3 | 0,12% α,ω-Bis(trimethylsilyl)-polymethylhydrogensiloxan 0,58% 2-Amino-2-methyl 1-Propanol | 86 | 26 | 14 | 6,9 |
| 4 | Keine | 49 | >100 | 38 | 4,9 |

**Patentansprüche**

1. Anorganische Titan- und Eisenoxidpigmente mit einer verbesserten Glanzgebung und Zerteilbarkeit in Lackbindemitteln mit einer Beschichtung aus 0,1% bis 3%, vorzugsweise 0,3% bis 1%, bezogen auf das Gewicht des Pigments, an Polyhydrogensiloxanen und Alkanolaminen, wobei das Gewichtsverhältnis der SiOH-gruppenhaltigen siliciumorganischen Verbindungen zu den Alkanolaminen im Bereich 1 : 1 bis 1 : 10, vorzugsweise 1 : 2 bis 1 : 5, liegt.

2. Anorganische Titan- und Eisenoxidpigmente gemäß Anspruch 1, dadurch gekennzeichnet, daß das Pigment ein Weißpigment auf Basis von $TiO_2$ oder Titanaten oder ein Eisenoxidfarbpigment ist und gegebenenfalls anorganisch nachbehandelt wurde.

3. Anorganische Titan- und Eisenoxidpigmente gemäß einem der Ansprüche 1 oder 2, dadurch gekennzeichnet, daß das Polyhydrogensiloxan ein kettenförmiges, verzweigtes oder cyclisches Polyhydrogensiloxan ist, das folgende Bausteine in wechselnder Anordnung aufweisen kann.

$$[R_2R'-SiO_{1/2}]\ [RH-SiO]\ [R'-SiO_{3/2}]\ [SiO_2]$$

wobei R und R' gleiche oder verschiedene Hydrogen-, Alkyl-, Cycloalkyl-, Aryl- und/oder Alkenyl-Reste sein können, die Anzahl der Si-Atome größer als 5 ist.

4. Anorganische Titan- und Eisenoxidpigmente gemäß einem der Ansprüche 1 bis 3, dadurch gekennzeichnet, daß das Polyhydrogensiloxan ein Polyalkylhydrogensiloxan oder ein Polyarylhydrogensiloxan oder ein Polyalkenylhydrogensiloxan oder ein Polyarylalkylhydrogensiloxan ist.

5. Anorganische Titan- und Eisenoxidpigmente gemäß einem der Ansprüche 1 bis 4, dadurch gekennzeichnet, daß das Polyhydrogensiloxan ein Polymethylhydrogensiloxan ist.

6. Anorganische Titan- und Eisenoxidpigmente gemäß einem der Ansprüche 1 bis 5, dadurch gekennzeichnet, daß als Alkanolamine Triethanolamin, Triisopropanolamin, Diethanolamin, Diisopropanolamin, 2-Amino-2-methyl-propanol-1 oder Gemische dieser Verbindungen enthalten sind.

7. Verfahren zur Herstellung anorganischer Titan- und Eisenoxidpigmente gemäß einem der Ansprüche 1 bis 6, dadurch gekennzeichnet, daß man eine Kombination von Polyhydrogensiloxanen und Alkanolaminen vor oder während der abschließenden Mikronisierung zugibt.

**Claims**

1. Inorganic titanium oxide and iron oxide pigments having improved gloss and distribution in lacquer binders having a coating of 0.1% to 3%, preferably 0.3% to 1%, based on the weight of the pigment, of polyhydrogen siloxanes and alkanolamines, the ratio by weight of the SiOH-group-containing organosilicon compounds to the alkanolamines being in the range of 1 : 1 to 1 : 10, preferably

1 : 2 to 1 : 5.

2. Inorganic titanium oxide and iron oxide pigments according to Claim 1, characterised in that the pigment is a white pigment based on $TiO_2$ or titanates or an iron oxide coloured pigment and has optionally been inorganically after-treated.

3. Inorganic titanium oxide and iron oxide pigments according to one of Claims 1 or 2, characterised in that the polyhydrogen siloxane is a chain, branched or cyclic polyhydrogen siloxane, which can contain the following units in alternating arrangement

$$[R_2R'-SiO_{1/2}]' [RH-SiO]\ [R'-SiO_{3/2}]\ [SiO_2]$$

wherein R and R' can be identical or different hydrogen, alkyl, cycloalkyl, aryl and/or alkenyl radicals and the number of Si atoms is higher than 5.

4. Inorganic titanium oxide and iron oxide pigments according to one of Claims 1 to 3, characterised in that the polyhydrogen siloxane is a polyalkyl hydrogen siloxane or a polyaryl hydrogen siloxane or a polyalkenyl hydrogen siloxane or a polyarylalkyl hydrogen siloxane.

5. Inorganic titanium oxide and iron oxide pigments according to one of Claims 1 to 4, characterised in that the polyhydrogen siloxane is a polymethyl hydrogen siloxane.

6. Inorganic titanium oxide and iron oxide pigments according to one of Claims 1 to 5, characterised in that they contain as alkanolamines triethanolamine, triisopropanolamine, diethanolamine, diisopropanolamine, 2-amino-2-methyl-1-propanol or mixtures of these compounds.

7. Process for the preparation of inorganic titanium oxide and iron oxide pigments according to one of Claims 1 to 6, characterised in that a combination of polyhydrogen siloxanes and alkanolamines is added before or during the final micronisation.

**Revendications**

1. Pigments inorganiques d'oxyde de titane et d'oxyde de fer doués de très bonnes propriétés de brillance et de dispersibilité dans des liants pour vernis avec un revêtement de 0,1 à 3%, de préférence de 0,3 à 1%, par rapport au poids de pigment, de polyhydrogénosiloxanes et d'alcanolamines, le rapport en poids des composés organosiliciques porteurs de groupes SiOH aux alcanolamines étant compris dans l'intervalle de 1 : 1 à 1 : 10, de préférence de 1 : 2 à 1 : 5.

2. Pigments inorganiques d'oxyde de titane et d'oxyde de fer suivant la revendication 1, caractérisés en ce que le pigment est un pigment blanc à base de $TiO_2$ ou de titanates ou un pigment coloré d'oxyde de fer et a éventuellement été exposé à un traitement inorganique subséquent.

3. Pigments inorganiques d'oxyde de titane et d'oxyde de fer suivant l'une des revendications 1 ou 2, caractérisés en ce que le polyhydrogénosiloxane est un polyhydrogénosiloxane en chaîne, ramifié ou cyclique qui peut présenter, avec une disposition alternée, les motifs suivants

$$[R_2R'-SiO_{1/2}]\ [RH-SiO]\ [R'-SiO_{3/2}]\ [SiO_2]$$

dans lesquels R et R' peuvent représenter des restes hydrogène, alkyle, cycloalkyle, aryle et/ou alcényle égaux ou différents, le nombre d'atomes de silicium étant supérieur à 5.

4. Pigments inorganiques d'oxyde de titane et d'oxyde de fer suivant l'une des revendications 1 à 3, caractérisés en ce que le polyhydrogénosiloxane est un polyalkylhydrogénosiloxane ou un polyarylhydrogénosiloxane ou un polyalcénylhydrogénosiloxane ou un polyarylakylhydrogénosiloxane.

5. Pigments inorganiques d'oxyde de titane et d'oxyde de fer suivant l'une des revendications 1 à 4, caractérisés en ce que le polyhydrogénosiloxane est un polyméthylhydrogénosiloxane.

6. Pigments inorganiques d'oxyde de titane et d'oxyde de fer suivant l'une des revendications 1 à 5, caractérisés en ce que de la triéthanolamine, de la triisopropanolamine, dela diéthanolamine, de la diisopropanolaminé, du 2-amino-2-méthylpropanol-1 ou des mélanges de ces composés sont contenus en tant qu'alcanolamines.

7. Procédé de production de pigments inorganiques d'oxyde de titane et d'oxyde de fer suivant l'une des revendications 1 à 6, caractérisé en ce qu'on ajoute une association de polyhydrogénosiloxanes et d'alcanolamines avant ou pendant la micronisation finale.